# DEMANDE DE BREVET EUROPEEN

(11) **EP 2 279 825 A1**
(43) Date de publication de la demande: **02.02.2011**
(21) Numéro de dépôt: 10405131.3
(22) Date de dépôt: 08.07.2010
(51) Int. Cl.: B23K 20/02

(54) **Procédé d'assemblage de pièces en alliage d'or**

(30) Priorité: 31.07.2009 CH 12002009
(71) Demandeur: Daniel Roth et Gérald Genta Haute Horlogerie SA, 1217 Meyrin 1 (CH)
(72) Inventeur: Pech, Jérôme, 39300 Sapois (FR)
(74) Mandataire: Stona, Daniel

(57) **Abrégé**

L'invention concerne un procédé d'assemblage de pièces en alliage d'or qui permet d'assembler des alliages d'or identiques ou différents, en particulier, des alliages d'or de couleurs différentes.

Ce procédé comprend les étapes suivantes :
a) on applique une couche d'étain sur une partie au moins d'une face d'une première pièce en alliage d'or,
b) on met la face étamée de la première pièce en alliage d'or directement en contact avec une face d'une deuxième pièce en alliage d'or,
c) on presse les première et deuxième pièces l'une contre l'autre et
d) on chauffe l'ensemble.

Ce procédé peut être utilisé pour fabriquer des damiers.

## Description

L'invention concerne un procédé d'assemblage de pièces en alliage d'or qui permet d'assembler des alliages d'or identiques ou différents, en particulier, des alliages d'or de couleurs différentes.

### Arrière-plan de l'invention

Les auteurs de l'article intitulé « Diffusion Soldering - A New Low Temperature Process For Joining Carat Gold Jewellery » paru dans le Gold Bull, 1993, 26 (3), pp. 90 à 104, se sont intéressés au soudage par diffusion d'alliages d'or. Leur étude s'est cependant limitée à la jonction d'alliages d'or de même couleur et ils se sont attachés à trouver les meilleures conditions opératoires, c'est-à-dire celles rendant possible, en particulier, l'obtention d'un joint qui ne puisse pas être distingué à l'oeil nu des zones d'alliages d'or qui le jouxtent.

Ces conditions opératoires sont résumées dans l'annexe figurant à la fin de l'article. Il s'agit pour l'essentiel :
- d'utiliser une feuille d'or recuit de 75 microns d'épaisseur recouverte de chaque côté de 3 à 4 microns d'étain par électro-placage ;
- de disposer cette feuille d'or revêtue d'étain entre les pièces en alliage d'or à unir,
- de chauffer l'ensemble à 435 ou 500 degrés ;
- de presser les pièces l'une contre l'autre sous une force typiquement de 1 MPa pendant 30 secondes ; et
- de soumettre ensuite le produit obtenu à une homogénéisation à 450 degrés pendant 1 heure.

### Exposé sommaire de l'invention

Le but de l'invention est de proposer un procédé d'assemblage de pièces en alliage d'or qui permette d'assembler efficacement des alliages d'or identiques ou de compositions différentes et en particulier des alliages d'or de couleurs différentes. Ce procédé doit être simple, rapide, facile à mettre en oeuvre, économique et utilisable industriellement. Il doit en outre permettre l'obtention de pièces dont les propriétés mécaniques répondent à l'ensemble des critères requis pour des alliages d'or destinés à l'horlogerie.

Selon l'invention, ce but est atteint par un procédé qui comprend les étapes suivantes :
a) on applique une couche d'étain sur une partie au moins d'une face d'une première pièce en alliage d'or,
b) on met la face étamée de la première pièce en alliage d'or directement en contact avec une face d'une deuxième pièce en alliage d'or,
c) on presse les première et deuxième pièces l'une contre l'autre et
d) on chauffe l'ensemble.

Ce procédé ne nécessite donc pas de recourir à une feuille d'or disposée entre les pièces à assembler.

En outre, ce procédé peut avantageusement être mis en oeuvre pour assembler une multitude de pièces en alliages d'or différents.

Les pièces obtenues peuvent ensuite être soumises à des traitements classiques, tels que des usinages, en vue de l'obtention de produits finis.

D'autres caractéristiques et avantages de l'invention vont maintenant être décrits en détail dans l'exposé qui suit et qui est donné en référence aux figures annexées qui représentent schématiquement :
- figures 1 à 7 : la fabrication d'un damier composé de quatre carreaux faisant alterner deux alliages d'or différents ; et
- figures 8 à 12 : la fabrication d'un damier composé de multiples carreaux faisant également alterner deux alliages d'or différents.

### Exposé détaillé de l'invention

Le procédé selon l'invention s'applique à toutes sortes d'alliages d'or.

Comme alliages d'or, on peut citer en particulier les alliages 18 carats et 22 carats.

Concernant les couleurs de ces alliages, il s'agit de couleurs présentes dans toute la masse des pièces. Il ne s'agit pas de couleurs de surface obtenues par un traitement thermique ou par l'application d'un revêtement.

Ces couleurs sont fonction des compositions des alliages et sont bien connues de l'homme du métier.

Ainsi les alliages d'or jaune vert, jaune pâle, jaune clair, jaune, rose et rouge du système ternaire Au-Ag-Cu ont les compositions élémentaires massiques et références colorimétriques normalisées ISO 28654 récapitulées dans le tableau ci-dessous.

| Désignation de la Couleur | Référence colorimétrique normalisée | Composition élémentaire massique (%) | | |
|---|---|---|---|---|
| | | Au | Ag | Cu |
| jaune-vert | 0 N | 58,5 | 30,0-34,0 | Le reste |
| jaune pâle | 1 N | 58,5 | 24,0-26,5 | |
| jaune clair | 2 N | 75,0 | 15,0-16,0 | |
| Jaune | 3 N | 75,0 | 12,0-13,0 | |
| Rose | 4 N | 75,0 | 8,5-9,5 | |
| Rouge | 5 N | 75,0 | 4,5-5,5 | |

Les ors gris sont obtenus par addition d'éléments blanchissants à la place du cuivre et de l'argent, comme le nickel ou le palladium. Dans le cas du nickel, la concentration élémentaire massique de cet élément doit être limitée à 5% pour éviter des problèmes d'allergie, l'alliage reste alors jaunâtre et nécessite un rhodiage. Dans le cas du palladium, il n'y a plus de limitation et des concentrations de 12,5% par exemple garantissent un alliage d'or gris de qualité.

Les ors d'autres couleurs (comme les ors bleus ou pourpres) sont des intermétalliques fragiles non utilisés pour des applications techniques.

La première étape du procédé selon l'invention consiste à appliquer une couche d'étain sur une partie au moins d'une face au moins d'une première pièce en alliage d'or.

L'application peut s'effectuer par étamage électrolytique, par exemple, à partir d'un bain acide de type stanneux ou d'un bain alcalin de type stannique.

La couche d'étain appliquée peut avoir une épaisseur allant de 0,5 à 4 microns et, de préférence, de 1 à 2 microns.

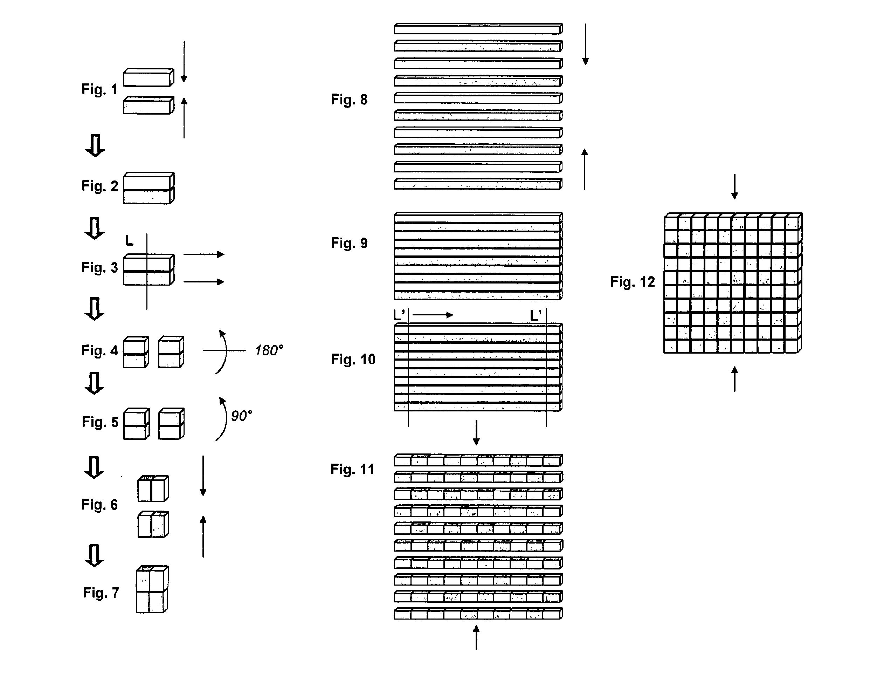

Ensuite, la face étamée, c'est-à-dire revêtue d'étain, de la première pièce en alliage d'or est ensuite mise en contact et pressée contre la deuxième pièce en alliage d'or, comme on peut le voir sur la figure 1.

Les deux faces en contact doivent avoir, le cas échéant après étamage, une rugosité comprise généralement entre 0,05 et 0,3 microns, de préférence entre 0,1 et 0,2 microns.

La pression est d'au moins 10 MPa et de préférence de 50 à 100 MPa.

Les pièces sous pression, maintenues en contact au moyen d'un dispositif adapté, sont introduites dans un four sous atmosphère protectrice, par exemple d'azote. Le four est généralement porté à une température de 400 à 500°C, généralement 450°C.

Quant à la durée de traitement, elle est calculée pour que l'état de diffusion des différentes espèces soit le même que lors d'un maintien de la pièce à 450°C pendant un temps adéquat. Ce temps à 450°C est appelé durée équivalente. En effet, la géométrie des pièces (1), leur nombre et l'installation utilisée influencent le temps de traitement à travers la vitesse de chauffe. Il est donc indispensable d'utiliser la durée équivalente pour garantir la reproductibilité des traitements de soudure. De plus, la durée équivalente dépend de la nature des alliages choisis (2).

### (1) Géométrie des pièces :

Du fait de l'inertie thermique des pièces et des échanges thermiques entre le four et les pièces, la durée de maintien des pièces ne peut pas être la même si leur géométrie change. Par exemple un assemblage cubique de 30 cm³ de volume mettra de l'ordre de 1,5 fois plus de temps pour passer de la température ambiante à la température de 450°C, qu'un assemblage cubique de 10 cm³.

### (2) Composition des alliages :

Par exemple, lorsque l'une des pièces est en alliage d'or jaune et l'autre est en alliage d'or rouge, la durée équivalente est comprise entre 2 et 6 heures, de préférence égale à environ 4 heures.

Après refroidissement, on obtient un assemblage résistant illustré sur la figure 2.

Le procédé selon l'invention peut être mis en oeuvre pour assembler une pluralité de pièces de plusieurs couleurs différentes.

Par exemple, il peut servir à assembler une série de premières pièces constituées d'un premier alliage d'or avec une série de deuxièmes pièces constituées d'un deuxième alliage d'or.

Il suffit alors de mettre en oeuvre plusieurs fois le procédé selon l'invention tel qu'il vient d'être décrit, pour obtenir un assemblage tel que celui représenté sur la figure 9. Ceci peut être fait de manière répétitive, c'est-à-dire en assemblant successivement les faces deux à deux, ou de manière simultanée, c'est-à-dire en assemblant en une seule opération l'ensemble des pièces.

En d'autres termes, pour assembler une pluralité de pièces en un premier alliage d'or et de pièces en un deuxième alliage d'or, on peut procéder comme suit :
- dans l'étape a), la couche d'étain est appliquée sur une partie au moins d'au moins une face de chaque pièce en premier alliage d'or ;
- dans l'étape b), chaque pièce en premier alliage d'or est mise en contact avec une ou plusieurs pièces en deuxième alliage d'or et vice-versa et les contacts se font entre une face étamée d'une pièce en premier alliage et une face d'une pièce en deuxième alliage ; et
- dans l'étape c), chaque pièce en premier alliage d'or est pressée contre au moins une pièce en deuxième alliage d'or et vice-versa.

### Compléments au procédé selon l'invention

Le procédé qui vient d'être décrit peut être mis en oeuvre avec des pièces de forme générale quelconque, du moment qu'elles présentent chacune au moins une face, plane ou non, permettant l'assemblage. Il suffit en effet qu'il y ait deux faces pouvant venir en contact l'une avec l'autre pour que l'assemblage puisse se faire.

Il peut donc en particulier être utilisé pour assembler des barres de section transversale rectangulaire, voire carrée.

Il peut aussi être utilisé pour assembler une pièce cylindrique à l'intérieur d'une autre pièce cylindrique creuse.

Une fois assemblées, les pièces peuvent subir toutes sortes d'opérations, telles que des usinages.

Ainsi, le procédé peut être utilisé pour associer deux barres de couleurs différentes visibles sur la figure 1, pour aboutir à l'assemblage de la figure 2.

Ensuite, il peut être complété par d'autres étapes pour obtenir un damier à quatre carreaux aux couleurs alternantes. On procède alors comme illustré sur les figures 3 à 6 :
e) on coupe l'assemblage obtenu à l'étape d) représenté sur la figure 2 suivant une ligne L sensiblement perpendiculaire aux faces des première et deuxième pièces qui sont en contact l'une avec l'autre,
f) on fait pivoter de 180 degrés l'une des découpes par rapport à l'autre,
g) on fait éventuellement pivoter les découpes de 90 degrés dans le même sens et
h) on exécute à nouveau les étapes a) à d).

On obtient de cette manière le damier à quatre carreaux de couleurs alternantes représenté sur la figure 7.

L'étape g) est facultative et n'est mise en oeuvre que si la machine effectuant la compression des pièces n'est capable de fonctionner que suivant un seul axe.

Dans le cas où on a assemblé plusieurs barres de section transversale rectangulaire (voire carrée) visibles sur la figure 8 pour obtenir l'assemblage représenté sur la figure 9, on peut ensuite réaliser le damier à multiples carreaux de couleurs alternantes représenté sur la figure 12.

Pour cela, on part de l'assemblage composé de plusieurs pièces représenté par la figure 9, puis on opère comme illustré sur les figures 10 à 11 :
i) on coupe l'assemblage obtenu à l'étape d) représenté par la figure 9 plusieurs fois suivant des lignes L' sensiblement perpendiculaires aux faces des pièces en premier alliage d'or et des pièces en deuxième alliage d'or qui sont en contact les unes avec les autres,
j) on fait pivoter de 180 degrés une découpe sur deux par rapport à une découpe voisine,
k) on fait éventuellement pivoter toutes les découpes de 90 degrés dans le même sens et
1) on exécute à nouveau les étapes a) à d).

On obtient de cette manière le damier à multiples carreaux de couleurs alternantes représenté sur la figure 12.

Ici aussi, l'étape k) est facultative et n'est mise en oeuvre que si la machine effectuant la compression des pièces n'est capable de fonctionner que suivant un seul axe.

Le produit obtenu à l'issue de l'étape d), h) ou 1) peut ensuite faire l'objet de traitements ou usinages divers.

### Exemple

On a mis en oeuvre le procédé selon l'invention pour réaliser un damier comme celui représenté sur la figure 12, c'est-à-dire composé de 100 carreaux dont les couleurs alternaient. On est parti de 5 barres en alliages d'or de type (1) et de 5 barres en alliage d'or de type (2), dont les surfaces à assembler ont été rectifiées pour garantir une rugosité moyenne de 0,15 microns. Les alliages d'or à assembler étaient :
- type (1) : un alliage d'or jaune 2N 18 carats ayant la composition )massique suivante :
   Au : 75%
   Ag : 15,5%
   Cu : le complément à 100% ;
- type (2) : un alliage d'or rouge 5N 18 carats ayant la composition massique suivante :
   Au : 75%
   Ag : 5%
   Cu : le complément à 100%.

Les barres avaient une hauteur de 5 mm, une épaisseur de 11 mm et une longueur de 50 mm.

L'épaisseur d'étain appliqué sur l'alliage d'or jaune était de 4 ± 0,5 microns.

Après mise en contact des barres et pression sous 75 MPa, chauffage à 450°C pendant 4 heures, on a obtenu l'assemblage représenté sur la figure 9.

Ensuite, après tronçonnage multiple, rectification des surfaces pour garantir une rugosité moyenne de 0,15 microns, application de l'étain sur les barres (sauf la dernière), puis inversion d'une barre sur deux, rotation de 90 degrés, remise en contact, compression et chauffage à 450°C pendant 4 heures (durée équivalente), on a obtenu la plaque de 50 mm de hauteur (10 carreaux), 11 mm d'épaisseur et 50 mm de longueur (10 carreaux) représentée sur la figure 12.

On constate, d'une part, que les joints sont invisibles à l'oeil nu, et, d'autre part, qu'ils n'ont pas affecté les couleurs des zones les avoisinant.

## Revendications

1. Procédé d'assemblage de pièces en alliage d'or, comprenant les étapes suivantes :
a) on applique une couche d'étain sur une partie au moins d'une face d'une première pièce en alliage d'or,
b) on met la face étamée de la première pièce en alliage d'or directement en contact avec une face d'une deuxième pièce en alliage d'or,
c) on presse les première et deuxième pièces l'une contre l'autre et
d) on chauffe l'ensemble.

2. Procédé selon la revendication 1, dans lequel la pression mise en oeuvre dans l'étape c) est d'au moins 10 MPa, de préférence de 50 à 100 MPa.

3. Procédé selon la revendication 1 ou 2, dans lequel les faces mises en contact l'une avec l'autre présentent une rugosité comprise entre 0,05 et 0,3 microns, de préférence, entre 0,1 et 0,2 microns.

4. Procédé selon l'une des revendications 1 à 3, dans lequel la couche d'étain appliquée dans l'étape a) a une épaisseur allant de 0,5 à 4 microns, de préférence de 1 à 2 microns.

5. Procédé selon l'une des revendications 1 à 4, dans lequel les première et deuxième pièces sont constituées d'alliages d'or différents.

6. Procédé selon la revendication 5, dans lequel les première et deuxième pièces sont constituées d'alliages d'or de couleurs différentes.

7. Procédé selon l'une des revendications 1 à 5, dans lequel la première pièce est en alliage d'or jaune et la deuxième pièce est en alliage d'or rouge et les pièces sont chauffées pendant 2 à 6 heures.

8. Procédé selon la revendication 7, dans lequel les pièces sont chauffées pendant 4 heures.

9. Procédé dans lequel on assemble une pluralité de pièces en un premier alliage d'or et de pièces en un deuxième alliage d'or, les premier et deuxième alliages ayant des couleurs différentes, en mettant en oeuvre plusieurs fois le procédé suivant l'une des revendications 1 à 8 de façon successive ou simultanée, et dans lequel :
- dans l'étape a), la couche d'étain est appliquée sur une partie au moins d'au moins une face de chaque pièce en premier alliage d'or ;
- dans l'étape b), chaque pièce en premier alliage d'or est mise en contact avec une ou plusieurs pièces en deuxième alliage d'or et vice-versa, et les contacts se font entre une face étamée d'une pièce en premier alliage d'or et une face d'une pièce en deuxième alliage d'or; et
- dans l'étape c), chaque pièce en premier alliage d'or est pressée contre au moins une pièce en deuxième alliage d'or et vice-versa.

10. Procédé selon l'une des revendications 1 à 8, comprenant en outre les étapes suivantes :
e) on coupe l'assemblage obtenu à l'étape d) suivant une ligne perpendiculaire aux faces des première et deuxième pièces qui sont en contact l'une avec l'autre,
f) on fait pivoter de 180 degrés l'une des découpes par rapport à l'autre,
g) on fait éventuellement pivoter les découpes de 90 degrés dans le même sens et
h) on exécute à nouveau les étapes a) à d).

11. Procédé selon la revendication 9, comprenant en outre les étapes suivantes :
i) on coupe l'assemblage obtenu à l'étape d) plusieurs fois suivant des lignes perpendiculaires aux faces des pièces en premier alliage d'or et des pièces en deuxième alliage d'or qui sont en contact les unes avec les autres,
j) on fait pivoter de 180 degrés une découpe sur deux par rapport à une découpe voisine,
k) on fait éventuellement pivoter toutes les découpes de 90 degrés dans le même sens et
1) on exécute à nouveau les étapes a) à d).

12. Procédé selon l'une des revendications 1 à 11, dans lequel les pièces sont des barres à section transversale rectangulaire.
